# EUROPÄISCHE PATENTSCHRIFT

(11) **EP 0 654 391 B1**
(45) Veröffentlichungstag und Bekanntmachung des Hinweises auf die Patenterteilung: **23.09.1998**
(21) Anmeldenummer: 95102024.7
(22) Anmeldetag: 12.03.1992
(51) Int. Cl.: B62D 1/26, E01H 8/12, B60L 5/40, B60M 1/34, E01B 25/28

(54) **Schienenblockmodul**
Rail block module
Bloc modulaire avec rail

(30) Priorität: 28.03.1991 DE 4110381
(43) Veröffentlichungstag der Anmeldung: 24.05.1995
(62) Teilanmeldung aus: 92104330.3
(73) Patentinhaber: Uttscheid, Georg, D-83026 Rosenheim (DE)
(72) Erfinder: Uttscheid, Georg, D-83026 Rosenheim (DE)
(74) Vertreter: Wächtershäuser, Günter, Prof. Dr.

(56) Entgegenhaltungen:
- EP-A- 0 151 982
- CH-A- 598 971
- DE-A- 2 751 129

## Beschreibung

Die Erfindung betrifft ein im Boden eingießbares Schienenblockmodul für ein Stromzuführungssystem einer Elektro-Flurförderbahn.

Stromzuführungssysteme sind bereits bekannt (DE-A-34 04 805). Dabei ragt eine Stromabnehmereinheit in einen im wesentlichen U-förmigen, im Boden eingelassenen Führungskanal für die Führung eines Flurförderfahrzeugs. In den beiden Seitenwandungen des Führungskanals sind elektrisch voneinander isolierte Stromversorgungsschienen angeordnet. Dabei kann es zu Kurzschlüssen und anderen Beschädigungen aufgrund von Fremdkörpern im Führungskanal kommen.

Es ist somit Aufgabe der vorliegenden Erfindung, das bekannte Stromzuführungssystem derart weiterzubilden, daß einerseits Störungen durch Fremdkörper im Führungskanal vermieden werden und eine ununterbrochene Stromzuführung gewährleistet ist, während andererseits die Führung des Flurförderfahrzeugs und eine einfache Herstellung und Montage gewährleistet sind.

Diese Aufgabe wird erfindungsgemäß durch das Schienenblockmodul gemäß Patentanspruch gelöst.

Das Schienenblockmodul vermeidet einerseits durch die räumliche Trennung der beiden Stromschieneneinheiten in einem isolierenden Block schwere Störungen durch Fremdkörper obwohl die kanalförmige Führungsschiene ständig offen ist. Andererseits wird durch die Block-Modulbauweise eine einfache Herstellung und Montage gewährleistet. Durch die Anordnung einer Stromschiene am Boden einer kanalförmigen Führungsschiene stehen die beiden senkrechten Seitenwandungen der kanalförmigen Führungschiene voll für die Führungsfunktion zur Verfügung. Bei dieser Bauweise kann das gesamte Schienenblockmodul so dimensioniert sein, daß es in einen Estrich eingegossen werden kann.

Im folgenden wird die Erfindung anhand von Zeichnungen näher erläutert. Es zeigen:
- Fig. 1: einen Querschnitt durch ein Schienenblockmodul nach der Erfindung;
- Fig. 2: eine Längsdarstellung, teilweise im Schnitt, des Stromzuführungssystems mit dem Schienenblockmodul nach der Erfindung.

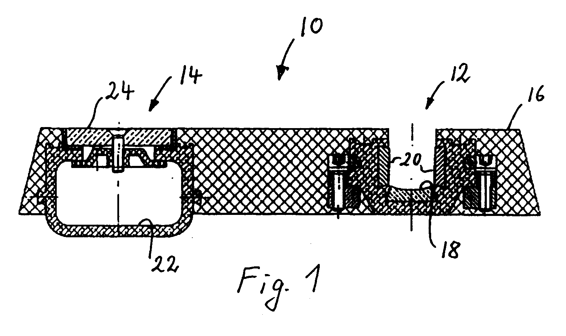

Figur 1 zeigt einen allgemein mit 10 bezeichneten Schienenblock in Modulbauweise für eine Elektro-Flurförderbahn. Dieser umfaßt eine erste Stromschieneneinheit 12 mit einer kanalförmigen Führungsschiene und eine zweite Stromscheneneinheit 14 mit einem Kabelkanal. Die beiden Stromschieneneinheiten sind in einem Block aus Isoliervergußmasse 16 eingegossen und dieser Block wird zur Montage bei der Erstellung des Hallenbodens in Hallenbodenestrich eingegossen.

Die Stromschieneneinheit 12 umfaßt eine kanalförmige Führungsschiene für den Eingriff des Lenksystems des Flurförderfahrzeugs. Am Boden der Führungsschiene befindet sich eine Stromschiene 18 und an den Seitenwandungen sind Leitschienen 20 mit geringer Reibung eingesetzt. Die zweite Stromschieneneinheit umfaßt einen Kabelkanal 22 und eine zweite Stromschiene 24.

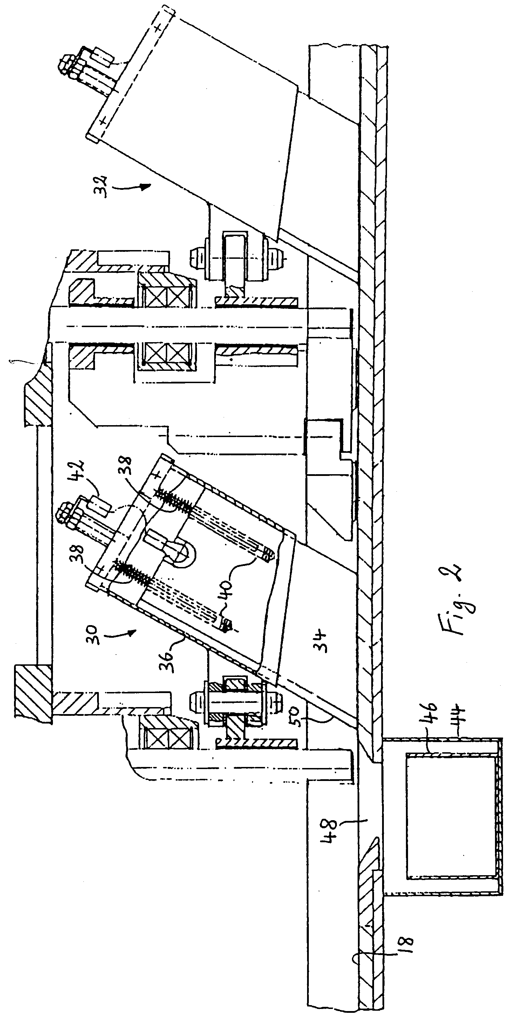

Figur 2 zeigt einen Längsschnitt durch die Führungsschiene mit der Elektrode 18 am Boden. Der Eingriff eines Stromabnehmers in diese Führungsschiene ist schematisch dargestellt, und zwar zusammen mit den nicht näher erläuterten Einrichtungen für die Lenkführung der Flurförderfahrzeuge. Das Stromabnehmersystem umfaßt zwei Stromabnehmer 30, 32, welche hintereinander angeordnet sind und elektrisch parallel geschaltet sind. Hierdurch wird gewährleistet, daß stets die Stromzuführung erhalten bleibt, auch wenn einer der Stromabnehmer durch Stoßbeanspruchung oder dergleichen den Kontakt mit der Stromschiene 18 verliert. Jeder Stromabnehmer umfaßt einen Kohleblock 34, welcher entlang einer schräg zur Längserstreckung der Stromschiene 18 stehenden Achse verschiebbar ist. Der Winkel zwischen der Längsrichtung der Stromschiene 18 und der Verschiebungsrichtung des Kohleblocks 34 ist als spitzer Winkel vorgesehen und liegt vorzugsweise im Bereich von 65 bis 20° und speziell im Bereich von 60 bis 25°. Ein Bereich von 45 bis 30° ist besonders bevorzugt. Das untere Ende eines jeden Kohleblocks 34 ist abgeschrägt, so daß die abgeschrägte Fläche voll auf der Stromschiene 18 aufliegt. Der Kohleblock 34 ist in einem Gehäuse 36 geführt und durch zwei Federn 38 beaufschlagt. Die Federn sitzen in Bohrungen 40 des Kohleblocks. Eine bewegliche Stromzuführung 42 verbindet den Kohleblock mit einem Anschluß.

In regelmäßigen Abständen finden sich Vertiefungen 44 mit Schmutzsammelkästen unter entsprechenden Öffnungen 48 der Stromschiene 18. Falls sich in der Führungsschiene Fremdkörper, zum Beispiel Schrauben oder dergleichen ansammeln, so werden diese durch den schräggestellten, vorderen Kohleblock 34 mitgenommen, bis sie durch die Öffnung 48 in den Schmutzsammelkasten 46 herabfallen. Durch die Schrägstellung des Kohleblocks 34 gestaltet sich diese Selbstreinigungswirkung besonders günstig, ohne daß die Gefahr besteht, daß der Kohleblock durch die Einwirkung der Fremdkörper beschädigt wird. Die Breite der Bodenfläche des Kohleblocks 34 ist derart gewählt, daß sie die Öffnung 48 in der Stromschiene 18 überbrücken kann. Der Querschnitt des Kohleblocks 34 und des Gehäuses 36 ist vorzugsweise rechteckig gewählt. Es kann jedoch auch ein runder Querschnitt vorgesehen sein. Für die Federbeaufschlagung genügen zwei Federn 38, es können jedoch auch drei oder vier Federn vorgesehen sein.

## Patentansprüche

1. Im Boden eingießbares Schienenblockmodul für ein Stromzuführungssystem einer Elektroflurförderbahn mit zwei Stromschieneneinheiten (12,14) mit je einer Stromschiene (18,24) in einem isolierenden Block, wobei die erste Stromschiene (18) sich am Boden einer kanalförmigen Führungsschiene für den Eingriff eines Lenksystems eines Flurförderfahrzeugs befindet.

## Claims

1. Rail block module which can be cast in the floor and is intended for a power supply system of an electric industrial-conveyor track, having two busbar units (12, 14) which each have a busbar (18, 24) in an insulating block, the first busbar (18) being situated at the bottom of a channel-shaped guide rail for engagement of a guidance system of an industrial-conveyor vehicle.

## Revendications

1. Bloc modulaire formant rail apte à être coulé dans le sol, pour un système d'amenée de courant d'une voie de manutention électrique, formé de deux unités formant rails conducteurs (12, 14) comportant chacune un rail conducteur (18, 24) dans un bloc isolant, le premier rail conducteur (18) se trouvant au fond d'un rail de guidage en forme de conduit destiné à recevoir un système de direction d'un véhicule de manutention.
